# EUROPEAN PATENT APPLICATION

(11) **EP 4 640 465 A1**
(43) Date of publication of application: **29.10.2025**
(21) Application number: 25150172.2
(22) Date of filing: 03.01.2025
(51) Int. Cl.: B60K 15/05, B60L 53/16, B60L 53/34

(54) **HIGH-VOLTAGE CONNECTOR PROTECTIVE FLAP DEVICE FOR A MATING FACE OF A HIGH-VOLTAGE CONNECTOR**

(30) Priority: 05.01.2024 DE 102024100252
(71) Applicant: TE Connectivity Solutions GmbH, 8200 Schaffhausen (CH)
(72) Inventor: SCHWAN, Ralf, 8200 Schaffhausen (CH); HEISS, Dominik, 8200 Schaffhausen (CH); BURKHARD, Andreas, 8200 Schaffhausen (CH)
(74) Representative: Patentanwaltskanzlei WILHELM & BECK

(57) **Abstract**

The invention relates to a high-voltage connector protective flap device (2) for an electrical high-voltage connector (0), in particular a high-voltage charging connector (0) for a vehicle having an electric traction motor or a charging station, having a holder (20), an actuator (30), and a protective flap (50), wherein the protective flap (50) is configured to be pivotable between a closed position (G) and an open position (O) of the protective flap device (2) on the holder (20) to open and close a mating face (10) of the high-voltage connector (0), and the protective flap device (2) is designed such that the protective flap (50) is pivotable as intended electromechanically by the actuator (30) and furthermore the protective flap (50) can alternatively be pivoted as intended manually.

## Description

The invention relates to a high-voltage connector protective flap device for an electrical high-voltage connector, in particular a high-voltage charging connector for a vehicle having an electric traction motor or a charging station. Furthermore, the invention relates to an electrical high-voltage connector, in particular a high-voltage charging connector, and an electrical high-voltage entity, each in particular for a vehicle having an electric traction motor or a charging station.

In the electrical sector (electrics, electrical engineering, electrical power engineering, etc.), a large number of electrical high-voltage connectors are known. These are used to transmit electrical voltages in the high-voltage range (high voltages: AC voltages over 24 V up to over 1 kV, DC voltages over 48 V up to over 1.5 kV), electrical currents in the high-current range (high currents over 25 A up to over 1 kA) and/or electrical powers in the high-power range (high powers of from 20 kW up to over 350 kW). In this case, the high-voltage connectors, for supplying and/or distributing electrical energy in cold, warm, possibly hot, contaminated, humid and/or chemically aggressive environments, must ensure problem-free transmission both in the short term and/or permanently.

Owing to a wide range of applications, aside from ground-based power engineering and its analogues, a large number of such high-voltage connectors are known in the automotive sector and in the non-automotive sector. In the automotive sector, such a high-voltage connector is suitable for example for electrically connecting a high-voltage and/or high-current line to a corresponding electrical high-voltage entity or vice versa, for connecting electrical high-voltage and/or high-current lines, or for a different type of electromechanical high-voltage and/or high-current contact connection. - In this specification, the term "high-voltage" is intended to encompass the terms high voltage, high current, and/or high power.

High costs for fossil fuels and efforts to reduce environmental impacts make, for example in the automotive sector, hybrid or electric vehicles necessary. One aspect of these vehicles is handling of high electrical charging and operating voltages and high electrical charging and operating currents, wherein the components in question of the vehicles need to be designed correspondingly. This applies in particular to high-voltage and/or high-current lines (e.g. stranded lines, conductor bars, busbars, etc.) as well as the relevant high-voltage and/or high-current terminals (e.g. connecting pieces, flat contacts, busbars, conductor bars, etc.) and thus also the high-voltage connectors.

If a high-voltage connector is positioned on a high-voltage cable, reference is also made to a flying (plug) connector or a coupling. If a high-voltage connector is positioned on/in an electrical high-voltage entity (cf. below), for example a section of a housing thereof, reference is also made to a connector device, such as a (built-in/attached) connector. - In the context of electrical power engineering (generating, converting, storing and transporting high-voltage electrical current in electricity grids, preferably with three-phase high-voltage transmission), owing to their complex structure reference is conversely made to cable accessories.

Efforts are continually being made to improve electrical high-voltage connectors. In particular the coming generation of electric mobility is distinguished in this case by faster and more convenient charging methods for fully electrical and hybrid road vehicles and utility vehicles. High-voltage charging connectors require protective flaps for this purpose, so that touching current-conducting parts of the high-voltage charging connector is prevented. - It is an object of the invention to specify a protective flap for a high-voltage connector, in particular a high-voltage charging connector for a vehicle having an electric traction motor or a charging station.

The object of the invention is achieved by means of a high-voltage connector protective flap device (also referred to solely as a "protective flap device" in the following description) for an electrical high-voltage connector, in particular a high-voltage charging connector; by means of an electrical high-voltage connector, in particular a high-voltage charging connector; and by means of an electrical high-voltage entity; each in particular for a vehicle having an electric traction motor or a charging station. - Advantageous refinements, additional features, and/or advantages of the invention can be inferred from the dependent claims and the following description.

The protective flap device according to the invention comprises a holder, an actuator, and a protective flap, wherein the protective flap is configured to be pivotable between a closed position and an open position of the protective flap device on the holder to open and close a mating face of the high-voltage connector, and the protective flap device is designed such that the protective flap is, on the one hand, pivotable as intended electromechanically by the actuator and preferably furthermore the protective flap can alternatively be pivoted as intended manually, on the other hand. - I.e. the protective flap is in particular actuatable both electromechanically and manually independently of one another.

The holder is installable on/in a high-voltage connector or a part of the high-voltage connector, such as a section of its connector housing. Such a connector housing can be designed, for example, as an essential connector housing, a partial housing, an outer or inner housing, a housing valance, a housing section, a housing area, etc. of the high-voltage connector. - The protective flap is in particular in the form of a lid. - The mating face can be designed as the only mating face or also as one mating face of several, in particular two, mating faces of the high-voltage connector. In the second case, the high-voltage connector can be designed as a CCS high-voltage connector (CCS: Combined Charging System), wherein the protective flap device is used for opening and closing in particular the mating face having the direct-current poles.

For the electromechanical pivoting of the protective flap, the actuator can engage translationally or rotationally on the protective flap. - For the manual pivoting of the protective flap, a clutch can be configured in a flow of force between the actuator and the protective flap, by means of which the protective flap can be decoupled from a holding force of the actuator. I.e. the clutch is designed as an actuator decoupling clutch and can furthermore be designed or designated as a slip clutch, barrier body clutch, release clutch, disengaging clutch, short circuit clutch, etc. - In this specification the concept of "force" is to include the concept of "torque" analogous thereto where suitable.

The protective flap can be pivotable around a pivot axis. In this case, the protective flap device or the protective flap can have a radial lever with respect to the pivot axis, on which the actuator engages and via which the protective flap is pivotable. Furthermore, the radial lever of the protective flap device or the protective flap and a cover plane of the protective flap can be configured in relation to one another at an angle of approximately: 0°, 15°, 30°, 45°, 60°, 75°, 90°, 105°, 120°, 135°, 150°, 165°, or 180°. The radial lever, thus a radial extension of the radial lever, and the cover plane, thus a radial extension of the cover plane, are preferably located essentially radially in relation to one another with respect to the pivot axis, wherein an angle deviating therefrom (180°) by approximately: 10°, 20°, 30°, or 40° can be configured.

The actuator can be configured to be movable substantially translationally back and forth on/in the holder for the electromechanical pivoting of the protective flap. In this case, the actuator is guided mounted, for example, on/in the holder. The holder preferably guides the actuator on two opposing sides, for example, in each case by means of a projection that can slide in a groove. For this purpose, the groove can be configured in the holder/actuator and the projection in the actuator/holder. The projection is in particular an elongated projection and is preferably only somewhat shorter (stroke of the actuator, tolerance compensation, safety) than the groove.

The actuator can have an actuating means, by means of which a pivoting means of the protective flap device or the protective flap is movable around the pivot axis. Upon actuation of the pivoting means by means of the actuating means, the pivoting means can be moved parallel with respect to the pivot axis. A circumferential movement angle of the pivoting means with respect to the pivot axis is preferably at least approximately: 75°, 90°, 105°, 120°, 135°, 150°, 165°, or 180°. The actuating means of the actuator can in particular be designed as an actuating recess and the pivoting means of the protective flap device or the protective flap can in particular be designed as a pin having a preferably round, in particular circular diameter.

A bearing between the actuating means and the pivoting means can convert a translational movement of the actuator into a rotational movement of the pivoting means with respect to the pivot axis. For this purpose, the pivoting means can preferably move both translationally and rotationally in relation to the actuating means or in the actuating means (cf. below). The bearing between the actuating means and the pivoting means can be configured as a plain bearing. The plain bearing is designed both as a radial plain bearing and an axial plane bearing, wherein this radial-axial plain bearing is substantially simultaneously strained both radially and axially upon pivoting of the protective flap.

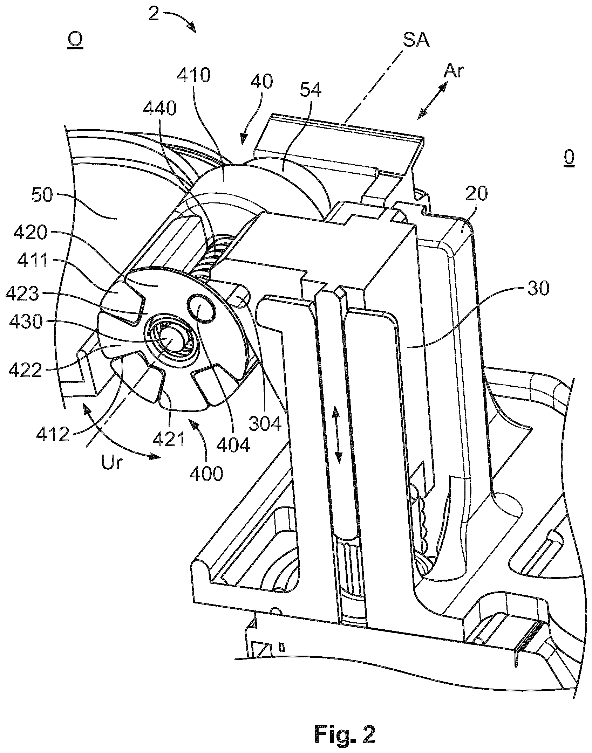

The actuator with its actuating means can be formed essentially as a claw in the area of the pivoting means. An extension of the claw in the direction of the pivot axis is preferably at least twice a diameter of the pivoting means. The actuating recess forms the opening of the claw. It is preferred in this case in a hexagonal view for the claw to be open on three sides (front and both sides) and closed on three sides (rear and top and bottom) (cf., for example, Figures 2, 6, and 7).

The protective flap device can be designed such that the entire clutch also pivots upon the electromechanical pivoting of the protective flap. Furthermore, the clutch can be held closed in a friction-locked and/or formfitting manner in the unloaded state. In addition, the manual pivoting of the protective flap can be implemented by the clutch. I.e. the protective flap can be decoupled from the holding force of the actuator by means of the clutch by a manual pivot movement. Furthermore, the clutch can permit the manual pivoting of the protective flap substantially independently of a position of the actuator.

The clutch can comprise a clutch assembly by means of which a flow of force between the actuator and the protective flap can be configured, on the one hand, and can be interrupted, on the other hand. In an idle state of the clutch assembly, the flow of force can be configured between the actuator and the protective flap. During electromechanical pivoting of the protective flap, the flow of force can be configured between the actuator and the protective flap. And during manual pivoting of the protective flap, the flow of force can be interrupted between the actuator and the protective flap.

The clutch assembly can be mounted on/in the holder so it is pivotable or rotatable around the pivot axis, wherein the clutch assembly is preferably accommodated on/in the holder by means of a clutch axis. A pivoting capability of the clutch assembly can be restricted in this case to less than approximately: 360°, 270°, 180°, 150°, 120°, 105°. A pivoting capability can, of course, be greater than 360° and can comprise no or a rotating capability of the clutch assembly. The clutch axis is preferably designed as an inner pivot bearing part and transmits no significant torques; the clutch assembly seated on the clutch axis transmits the significant torques. The clutch axis only mounts the clutch assembly and possibly the protective flap on/in the holder.

Furthermore, the clutch assembly can be accommodated on the clutch axis so it is movable back and forth in one or both axial directions (play). I.e. the clutch assembly is pushed onto the clutch axis, wherein preferably at least minor radial play is configured between the clutch axis and the clutch assembly. Furthermore, the clutch assembly can be designed as elastic or resilient in the axial direction of the pivot axis. In addition, the clutch assembly can be designed as drum-shaped or as box-shaped.

The clutch assembly can comprise two pressure pieces movable toward one another. The pressure pieces can be configured as mechanically pre-tensioned toward one another in the axial direction in the clutch assembly. This can be carried out, for example, by means of a spring element, in particular a coiled spring (preferred) or an elastic element, such as an elastomer element. The pressure pieces can be designed such that they mutually guide one another in the axial direction such that they are only jointly pivotable or rotatable in the circumferential direction.

Guide devices of the pressure pieces affecting one another can engage in one another for the mutual guidance of the pressure pieces. The pivoting means of the protective flap device for the protective flap can be configured between the pressure pieces in the axial direction. In order that the pressure pieces remain configured so they are movable toward one another, the pivoting means is mounted, preferably mounted by a plain bearing, in at least one of the two pressure pieces in the axial direction. This preferably relates to both pressure pieces. A torque can be introduced into the pressure pieces or the clutch assembly by means of the pivoting means.

The guide devices can be designed as guide devices elongated in the axial direction. In this case, at least one guide projection of a pressure piece can be guided in a guide recess of the other pressure piece in the axial direction. Furthermore, neglecting the pivoting means, the pressure pieces can be in the form of crowns and can be intermeshed by means of their prongs. The prongs of both pressure pieces are meshed with one another or the guide projections of both pressure pieces are plugged one into another here in such a way that a torque with respect to the pivot axis can be transmitted from one pressure piece to the other pressure piece and vice versa.

Two guide devices of only one single pressure piece of the clutch assembly, which are directly adjacent to one another in the circumferential direction, can be connected to one another by means of a radially inner circumferential connection (increased stability). In this case, the circumferential connection is in particular (also) configured on a free end section of the two guide devices.

The clutch assembly can be configured between two mounting means of the protective flap, which are furthermore mounted to be pivotable or rotatable on the clutch axis. A relevant mounting means can be designed here as a mounting tab protruding away from the protective flap. The mounting means or the mounting tab can have a through-recess for mounting the protective flap on the clutch axis.

Furthermore, the clutch assembly can have a clutch surface of the clutch of the protective flap device on at least one axial outer side. In particular, this relates to both axial outer sides. And at least one mounting means of the protective flap can have a clutch surface of the clutch of the protective flap device on an axial inner side. In particular, this relates to both mounting means.

For force transmission within the protective flap device, two clutch surfaces relevant to one another of the clutch assembly and a mounting means can be formed as friction surfaces and/or formfitting surfaces. Two clutch surfaces relevant to one another of the clutch assembly and a mounting means can have clutch locking devices relevant to one another.

A relevant clutch locking device can be designed as a formfitting locking device, which can be designed as a projection or a recess. In this case, the one clutch surface can have a projection (clutch locking device or formfitting locking device) and the relevant other clutch surface can have a recess (clutch locking device or formfitting locking device). Preferably, one clutch surface of the clutch assembly has a projection and a relevant other clutch surface of the mounting means has at least one recess; this can also be formed in reverse, of course.

The clutch locking devices of the clutch surfaces relevant to one another can interact in such a way that the protective flap can be pivoted both electromechanically and manually between the closed position and the open position. - In particular, two clutch surfaces relevant to one another are configured between the clutch assembly and the relevant mounting means on each of both sides of the clutch assembly.

For force transmission within the protective flap device, a clutch surface of the clutch assembly can have a single clutch locking device for catching the clutch locking devices of the mounting means. A clutch surface of the mounting means can have at least two, in particular three clutch locking devices, which are arranged offset in relation to one another in the circumferential direction. Each two clutch locking devices directly adjacent in the circumferential direction can possibly be configured at an angle of approximately: 80°, 85°, 90°, 95°, 100°, or 105° on/in the clutch surface of the mounting means. The clutch surface of the mounting means can have clutch locking devices for a manual open position, electromechanical pivoting, and/or a manual closed position of the protective flap device.

The protective flap device can be designed in such a way that, in its closed position and/or in its open position, self-inhibition is substantially configured between the actuator and the clutch assembly or a preferably single pressure piece. The actuator can be seated here on the clutch assembly such that the clutch assembly prevents further movement of the actuator. Furthermore, the actuator can be seated here with in each case a planar area on in each case a planar area of the clutch assembly or on in each case a planar area of a single pressure piece. These two areas are configured, for example, opposite to one another on the actuator in an area of the actuating means.

The pivoting means of the protective flap device for the protective flap can be designed as a pin produced independently of the pressure pieces or as a pivoting means on a pressure piece. In the second case, a cross section of the pivoting means is as far as possible designed in the form of a circular arc section or elliptical arc section. - The holder, the actuator, the protective flap, and/or the respective pressure piece can be integrally formed.

An integral formation is understood as a formation of the relevant component part (holder, actuator, protective flap, and/or pressure piece) in which there is only a single component part that can only be divided with its destruction. The component is manufactured from a single original piece and/or a single original compound (plastic melt), which is in turn necessarily integral. An internal coherence takes place (exclusively) by means of adhesion and/or cohesion. A coating etc. can additionally be present in this case.

The protective flap device can have a motor for actuating the actuator. The motor can be designed here as an electric motor, a linear motor, or a drive involving this. The motor is preferably configured in a housing. Furthermore, an actuator of the motor has a mechanical operational connection to the actuator or the actuator of the protective flap device is designed as an actuator of the motor or vice versa. The holder can be screwed together with the preferably housed motor. And the protective flap device can form a section of a connector housing of the high-voltage connector. The holder can be mounted on/in the connector housing or can be a section of the connector housing.

The high-voltage connector according to the invention comprises at least one connector housing and a protective flap device, wherein the protective flap device is designed according to the invention. In this case, the high-voltage connector can of course have an electrical high-voltage contact device having at least one electrical high-voltage terminal. The high-voltage connector can be designed as an electrical module, for example, for maintaining or replacing the high-voltage connector.

The high-voltage entity according to the invention comprises an electrical high-voltage device and a protective flap device and/or an electrical high-voltage connector, wherein the protective flap device and/or the high-voltage connector is designed according to the invention. - Such a high-voltage entity can be designed, for example, as an electrical component, an electrical module (for example, for replacing the high-voltage device together with the high-voltage connector), an electrical appliance, an electrical apparatus (such as a charging station), an electrical assembly, etc.

A vehicle - in particular a motor vehicle (road vehicle, utility vehicle, etc.), but also: rail vehicle, water vehicle, and/or aircraft - having an electric traction motor is understood as a motor vehicle which, in addition to an electric traction motor, can have a further nonelectric drive, such as an internal combustion engine. I.e. a vehicle having an electric traction motor can be understood, for example, as an electric vehicle (solely electric motor drive), a hybrid electric vehicle, a fuel-cell vehicle, etc.

The invention is explained in more detail hereinafter on the basis of exemplary embodiments with reference to the appended schematic drawings, which are not to scale. Sections, elements, component parts, units, components, and/or schematic diagrams which have an identical, unique, or analogous design and/or function are identified with the same reference signs in the description of the figures (see below), the list of reference signs, the claims, and the figures of the drawing. A possible alternative which is not explained in the description of the invention (see above), is not shown in the drawing, and/or is not exhaustive, a static and/or kinematic reversal, a combination, etc., with respect to the exemplary embodiments of the invention or a component, a diagram, a unit, a component part, an element, or a section thereof can furthermore be inferred from the list of reference signs and/or the description of the figures.

In the invention, a feature (section, element, component part, unit, component, function, dimension, etc.) can be embodied positively, i.e. present, or negatively, i.e. absent. In this specification (description (description of the invention (see above), description of the figures (see below)), list of reference signs, claims, drawing), a negative feature is not explicitly explained as a feature if according to the invention it is not important that it is absent. I.e. the invention which is actually made and not constructed by the prior art consists of omitting this feature.

A feature of this specification can be applied not only in an indicated type and/or manner, but also in another type and/or manner (isolation, combination, replacement, addition, alone, omission, etc.). In particular, it is possible on the basis of a reference signs and a feature assigned thereto or vice versa, in the description, the list of reference signs, the claims, and/or the drawings, to replace, add, or omit a feature in the claims and/or the description. Moreover, a feature in a claim can thus be interpreted and/or specified in more detail.

The features of the description are also interpretable as optional features (in view of the (initially usually unknown) prior art); i.e. any feature can be interpreted as an optional, arbitrary, or preferred feature, thus one which is not compulsory. It is thus possible to detach a feature, possibly including its periphery, from an exemplary embodiment, wherein this feature is then transferable to a generalized concept of the invention. The absence of a feature (negative feature) in an exemplary embodiment shows that the feature is possibly optional (person skilled in the art) with respect to the invention. Furthermore, in the case of a term of art for a feature, a generic term for the feature can also be implicitly understood (possible further hierarchical breakdown into subtype etc.), due to which, for example, in consideration of equivalent effect and/or equivalence, a generalization of the feature is possible.

In the schematic figures of the drawing, which are solely by way of example:
Figure 1 shows a lateral sectional view of an exemplary embodiment of a first embodiment of a protective flap device according to the invention for a high-voltage connector according to the invention,
Figures 2 and 3 each show, in a lateral sectional (Figure 2) and front (Figure 3) perspective view diagonally from above, an exemplary embodiment of a second embodiment of the protective flap device according to the invention,
Figures 4 and 5 each show, in perspective views from the front (Figure 4) and from the side (Figure 5), a clutch assembly for a mounting between a protective flap and a holder of the protective flap device from Figures 2 and 3,
Figures 6 and 7 each show, in lateral sectional perspective views, an inner self-inhibition of the protective flap device in a closed position (Figure 6) and an open position (Figure 7) of the protective flap, and
Figure 8 shows a perspective view diagonally from the front of a CCS high-voltage connector for a vehicle having an exemplary embodiment of the second embodiment of the protective flap device according to the invention.

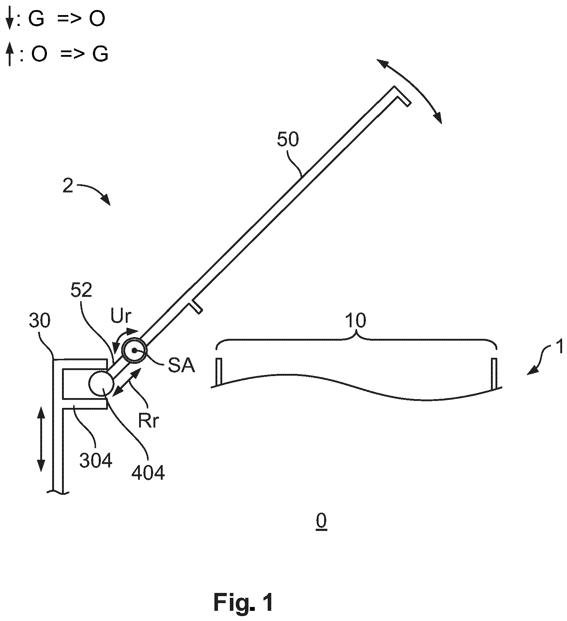

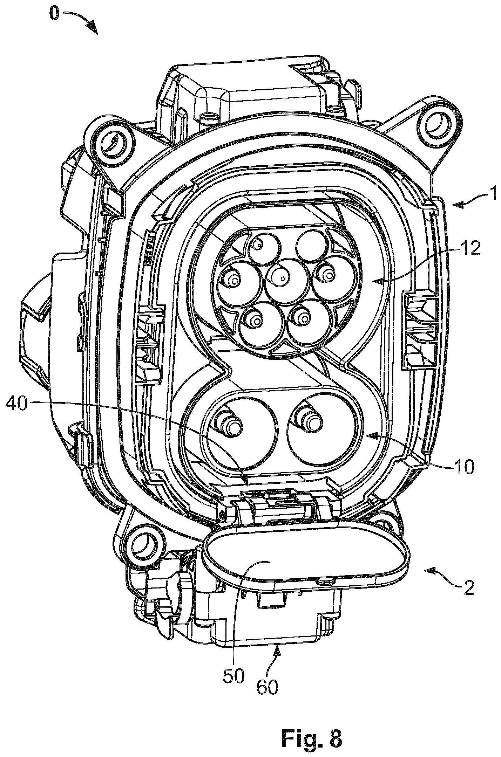

The invention is explained in more detail hereinafter on the basis of exemplary embodiments of two embodiments (Figure 1 and Figures 2-8) of a protective flap device 2 for an electrical high-voltage charging connector 0 (cf. Figure 8: CCS high-voltage charging connector 0 designed as a high-voltage charging socket 0 (cf. also above)) for a vehicle. Of course, the invention is also applicable to other electrical connectors (cf. above), in particular high-voltage connectors 0. For this purpose, the high-voltage connector 0 can be designed, for example, as an attached connector 0, a built-in connector 0, possibly a flying plug connector 0, etc.

Although the invention is described and illustrated in more detail by preferred exemplary embodiments, the invention is not restricted by the disclosed exemplary embodiments, but rather is of a more fundamental nature. Other variations can be derived therefrom and/or from the above (description of the invention) without departing from the scope of protection of the invention. The invention is generally applicable in the electrical sector, i.e. also in the non-automotive sector, in an electrical high-voltage entity (cf. above). One exception is ground-based electrical power engineering and its analogues.

In the drawing, only those spatial sections of a subject matter of the invention are shown which are necessary to understand the invention. Designations such as connector and counter connector, terminal and counter terminal etc. are to be interpreted synonymously, i.e. are each exchangeable with one another if necessary. The explanation of the invention (cf. also above) on the basis of the drawing refers hereinafter, inter alia, to a pivot axis SA of the protective flap device 2, its axial direction Ar (undirected), its radial direction Rr (undirected), and/or its circumferential direction Ur. The pivot axis SA is preferably coaxial to a clutch axis 430 (cf. below).

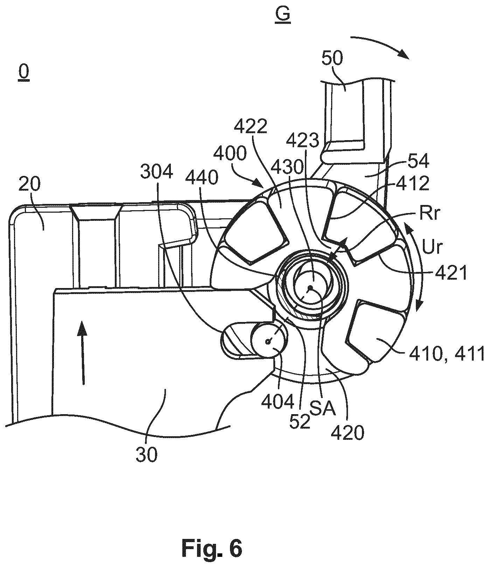

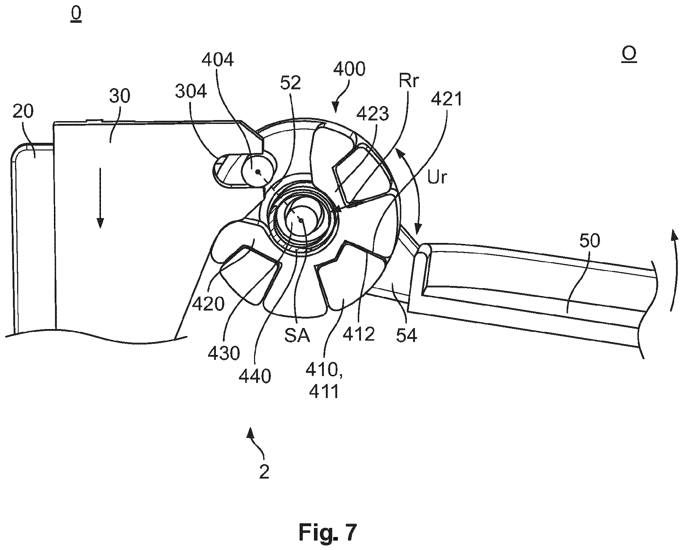

Figure 1 shows an exemplary embodiment of the first embodiment of the protective flap device 2 according to the invention. The protective flap device 2 comprises a holder 20, an actuator 30, and a pivotable protective flap 50. The protective flap 50 is configured to be pivotable around the pivot axis SA on the holder 20 or on/in the protective flap device 2 to open and close a mating face 10 of the high-voltage connector 0 (cf. Figure 8). The protective flap 50 can be electromechanically pivoted back and forth as intended between a closed position G (Figure 7) and an open position O (Figure 6) of the protective flap device 2 by means of the actuator 30.

For this purpose, the actuator 30 engages translationally on the protective flap 50, wherein a radial lever 52 of the (Figure 1) or on the (Figures 2 to 8) protective flap 50 converts the translational movement of the actuator 30 into a rotational movement of the protective flap 50. For this purpose, the actuator 30 has an actuating means 304, designed in particular as an actuating recess 304, which gives the actuator 30 the appearance of a claw in the area of the actuating recess 304, in which a pivoting means 404, which is in the form of a pin in particular, of the protective flap 50 or the protective flap device 2 is accommodated. The claw can be constituted here by a single claw section or a plurality of claw sections, in particular two claw sections.

The pivoting means 404 is configured to be pivotable around the pivot axis SA, wherein the rotational movement of the pivoting means 404 around the pivot axis SA is generated by a translational movement of the actuating recess 304. The pivoting means 404 moves both slightly translationally and also slightly rotationally in the actuating recess 304 for this purpose, wherein the pivoting means 404 furthermore also performs the translational movement of the actuator 30. The translational movement component of the pivoting means 404 within the actuating recess 304 is preferably substantially perpendicular to the translational movement of the actuator 30. - A rotational actuator 30 is also applicable, of course.

Figures 2 to 7 show an exemplary embodiment of the second embodiment of the protective flap device 2 according to the invention, wherein the protective flap device 2 is designed analogously to the protective flap device 2 of Figure 1 and furthermore comprises a clutch 40 or an actuator decoupling clutch 40. The protective flap 50 can be manually pivoted back and forth as intended between the closed position G (Figure 7) and the open position O (Figure 6) of the protective flap device 2 by means of the clutch 40. I.e. the actuation of the protective flap 50 by means of the actuator 30 is bypassed. The clutch 40 is configured here in a flow of force between the actuator 30 and the protective flap 50, wherein the protective flap 50 can be decoupled from a holding force of the actuator 30 by means of the clutch 40.

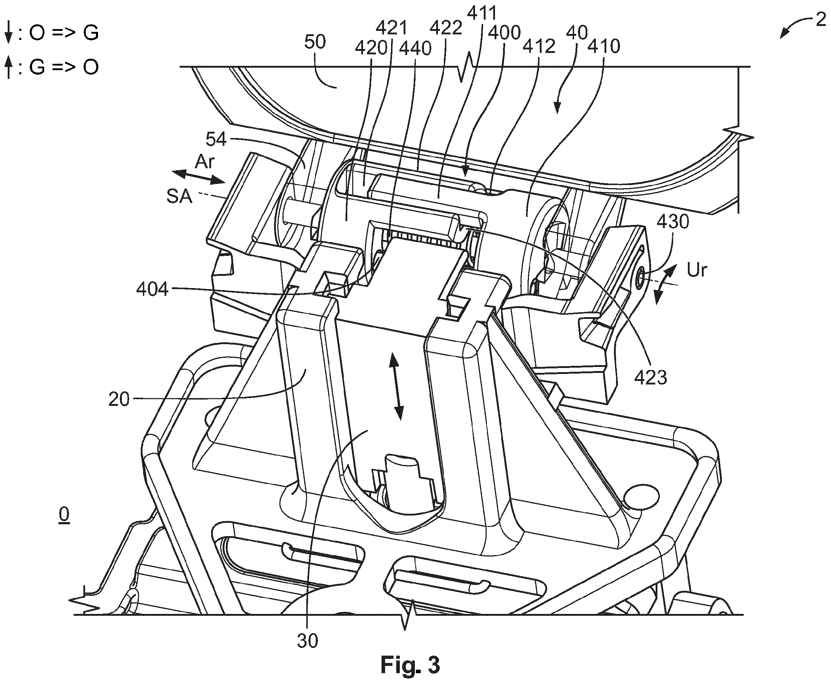

The actual clutch (cf. in particular Figures 2 and 3) is located here between two mounting means 54 of the protective flap 50, designed in particular as mounting tabs 54, and a preferably drum-shaped or box-shaped clutch assembly 400 (clutch surfaces 550 of the mounting means 54 and clutch surfaces 450 of the clutch assembly 400) accommodated therebetween. Both the mounting tabs 54 and the clutch assembly 400 are seated so they are preferably movable back and forth somewhat (play) in the axial direction Ar on a clutch axis 430, which is provided or mounted on/in the holder 20. The actual clutch of the protective flap device 2 is configured between the inner sides of the mounting tabs 54 (clutch surfaces 450) and the relevant outer sides of the clutch assembly 400 (clutch surfaces 550).

For electromechanical pivoting (cf. also Figures 6 and 7) of the protective flap 50, the clutch surfaces 550, 450 relevant to one another of the mounting tabs 54 and the clutch assembly 400 each abut one another fixedly, in particular in a friction-locked and/or formfitting manner, so that via this a torque is transmittable, in particular from the clutch assembly 400 via the mounting tabs 54 to the protective flap 50 (cf. below: clutch locking device 452 engages in clutch locking device 552). I.e. the clutch 40 is engaged. The protective flap 50 and the clutch assembly 400 can be pivoted substantially (play) by the same angle here. For this purpose, the actuator 30 engages with its actuating means 304 in particular on the clutch assembly 400, for which purpose the clutch assembly 400 has the pivoting means 404.

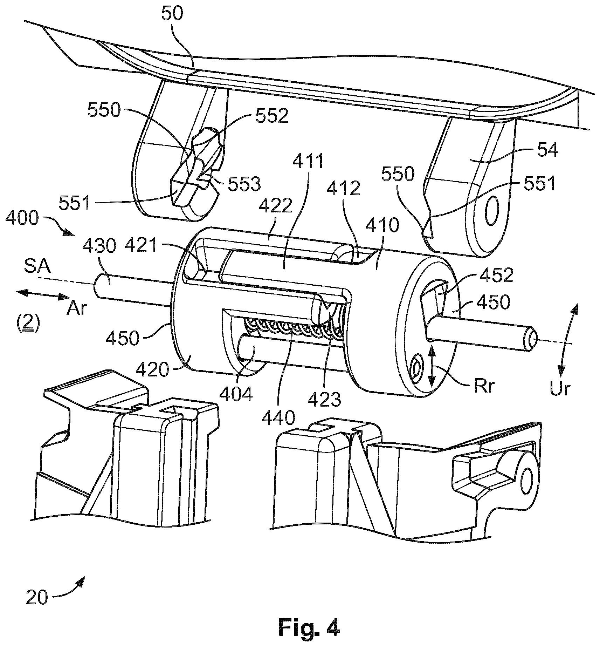

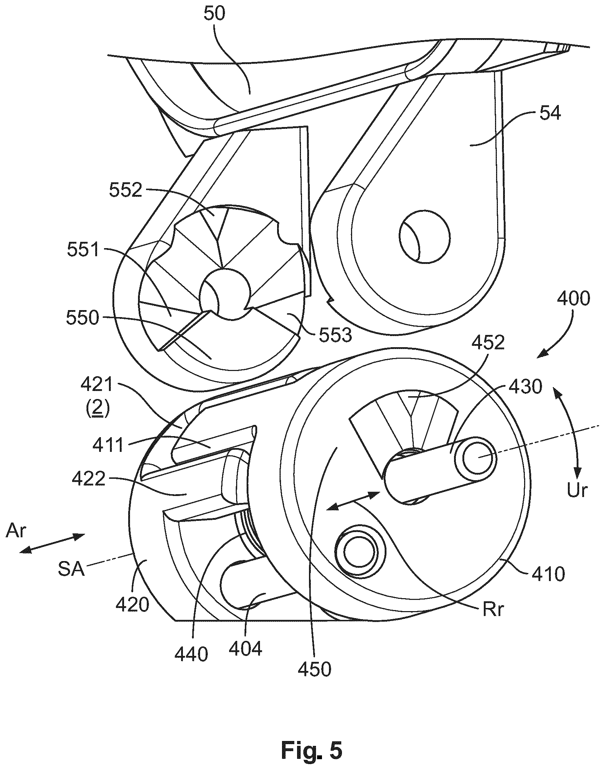

For the manual pivoting (cf. in particular Figures 4 and 5) of the protective flap 50, the respective above fixed connection (cf. above the mutual position of the clutch locking devices 452, 552) between the clutch surfaces 550, 450 relevant to one another of the mounting tabs 54 and the clutch assembly 400 disengages, so that the protective flap 50 can be pivoted independently of the clutch assembly 400. I.e. the clutch 40 is disengaged. Significant torque is no longer transmitted between the protective flap 50 and the clutch assembly 400. A torque which is still transmittable in this case solely results from a sliding friction force of the mounting tabs 54 on the clutch assembly 400.

In order that the clutch 40 can be disengaged, the clutch assembly 400 is designed as resilient, elastic, or able to be compressed and relaxed in the axial direction Ar in such a way that a length of the clutch assembly 400 can be reduced and increased again or increased and reduced again in the axial direction Ar. - The clutch 40 configures itself independently both for electromechanical pivoting and also manual pivoting, wherein the clutch assembly 400 assumes its enlarged size for electromechanical pivoting and its reduced size in the axial direction Ar for manual pivoting. A force for reducing the size of the clutch assembly 400 results here from a force for manually pivoting the protective flap 50.

A flow of force during the electric motor pivoting of the protective flap 50 takes place starting from the motor-driven actuator 30 via the clutch assembly 400 and the engaged clutch 40 into the protective flap 50, wherein the clutch assembly 400 also pivots. - A flow of force during the manual pivoting of the protective flap 50 takes place starting from the protective flap 50 via the disengaging and then disengaged clutch 40, wherein the clutch assembly 400 is not pivoted and is fixed by the actuator 30.

Hereinafter, two clutch surfaces 550, 450 relevant to one another of a single mounting tab 54 and the clutch assembly 400 are explained in more detail in their design and their function (cf. in particular Figures 4 and 5). The explanations in this regard also relate in particular to the other clutch surfaces 550, 450 on the other side of the clutch assembly 400 in the axial direction Ar. - In this case, the clutch surfaces 550, 450 are preferably substantially circular in a first approximation and in a top view in the axial direction Ar and are arranged coaxially to one another with respect to the clutch axis 430.

The clutch surface 450 of the clutch assembly 400 preferably has a clutch locking device 452 for catching the clutch locking devices 551, 552, 553 of the clutch surface 550 of the mounting means 54. In this case, the clutch locking device 452 is designed in particular as a formfitting locking device 452 and is preferably conceived as a projection, wherein a recess is also usable, of course. - Depending on the design of the clutch 40, the clutch locking device 452 can comprise more than one projection and/or more than one recess.

Furthermore, the clutch surface 550 of the mounting means 54 preferably has three clutch locking devices 551, 552, 553 offset in the circumferential direction Ur. The clutch locking device 551 is conceived here for a manual open position O, the clutch locking device 552 for electromechanical pivoting, and the clutch locking device 553 for a manual closed position G. The relevant clutch locking device 551, 552, 553 is in particular designed as a formfitting locking device 551, 552, 553 and is preferably conceived as a recess, wherein a projection is also usable, of course. - Depending on the design of the clutch 40, the clutch locking device 551, 552, 553 can comprise more than one recess and/or more than one projection; the condition is solely that they are formed substantially identically to one another so that they can interact with the clutch locking device 452 of the clutch assembly 400.

The one-sided preferably single clutch locking device 452 of the clutch assembly 400 is used to catch the clutch locking devices 551, 552, 553 of the mounting means 54. - If the clutch locking device 452 is locked with the middle clutch locking device 552 in the circumferential direction Ur, the protective flap 50 can be moved by electric motor from its open position O into its closed position G and from its closed position G into its open position O.

Now for the two cases that the protective flap 50 is to be manually moved and the clutch locking device 452 is locked with the middle clutch locking device 552 in the circumferential direction Ur. During the manual movement of the protective flap 50, the clutch assembly 400 compresses due to an interaction of the projections provided between the clutch surfaces 450, 550 relevant to one another; thus, on the one hand, the projection 452 of the clutch assembly 400 and, on the other hand, the projections formed between the clutch locking devices 551 & 552 or 552 & 553 (cf. Figure 5). Of course, this takes place on both sides of the clutch assembly 400, wherein the clutch 40 is disengaged in this way.

If the protective flap 50 is moved manually from its closed position G into its open position O (starting position: clutch locking device 452 and clutch locking device 552 are engaged), the clutch 40 thus disengages and the clutch locking device 452 snaps into the clutch locking device 553. And the protective flap 50 is moved manually from its open position O into its closed position G (starting position: clutch locking device 452 and clutch locking device 552 are engaged), the clutch 40 thus disengages and the clutch locking device 452 snaps into the clutch locking device 551. - By actuating the actuator 30, the clutch locking device 452 can be engaged again with the clutch locking device 552.

In order that the clutch assembly 400 is made resilient, elastic, or compressible in the axial direction Ar, the clutch assembly 400 can have two pressure pieces 410, 420, which are opposite to one another in the axial direction Ar, in particular are arranged to be rotatable on the clutch axis 430, and preferably engage in one another such that they mutually guide one another in the axial direction Ar. For this purpose, in particular on the clutch axis 430, a spring element 440 is configured, which mechanically pre-tensions the two pressure pieces 410, 420 toward one another in the axial direction Ar. The spring element 440 is designed in particular as a coiled spring 440, an elastic element, an elastomer element, etc. The spring element 440 in particular implements re-engagement of the clutch 40 after it is disengaged.

For the mutual guidance, the pressure pieces 410, 420 have guide devices 411, 412; 421, 422, by means of which the pressure pieces 410, 420 mutually engage in one another, due to which they are only jointly pivotable or rotatable in the circumferential direction Ur (clutch assembly 400 without spring element 440). The preferably pin-shaped pivoting means 404 is configured between the two pressure pieces 410, 420 to actuate the clutch assembly 400, for which purpose the pressure pieces 410, 420 are accommodated accordingly, so that the actuator 30 can engage on the pivoting means 404.

The first pressure piece 410 comprises at least one or preferably at least two guide projections 411 formed in particular as guide pins 411 (guide devices 411). Two guide projections 411 directly adjacent to one another in the circumferential direction Ur preferably do not have a radial Rr inner circumferential connection (cf. below) in this case. Furthermore, the first pressure piece 410 comprises at least one or preferably at least two guide recesses 412 (guide devices 412), formed in particular as guide longitudinal recesses 412, wherein one guide recess 412 can be configured between two guide projections 411 in the circumferential direction Ur.

The second pressure piece 420 comprises at least one or preferably at least two guide projections 422 (guide devices 422), formed in particular as guide pins 422. In this case, two guide projections 422 directly adjacent to one another in the circumferential direction Ur preferably have a radial Rr inner circumferential connection 423. Furthermore, the second pressure piece 420 comprises at least one or preferably at least two guide recesses 421 (guide devices 421) designed in particular as guide longitudinal recesses 421, wherein one guide recess 421 can be configured between two guide projections 422 in the circumferential direction Ur.

Within the clutch assembly 400, the guide projections 411 of the first pressure piece 410 engage in the guide recesses 421 of the second pressure piece 420, and the guide projections 422 of the second pressure piece 420 engage in the guide recesses 412 of the first pressure piece 410. By means of this mutual guidance by the guide devices 411, 412; 421, 422, an ability to transmit a torque from one pressure piece 410/420 to the other pressure piece 420/410 is also ensured.

The protective flap device 2 is preferably designed (cf. Figures 6 and 7) such that, in the closed position G and/or in the open position O, the actuator 30 is seated on the clutch assembly 400 or on one of the pressure pieces 410, 420 such that the protective flap device 2 inhibits itself in its intrinsic movement. In this case, the actuator 30 obstructs a further movement of the clutch assembly 400 and the clutch assembly 400 obstructs a further movement of the actuator 30. Preferably, a planar area of the actuator 30 is seated on a planar area of the clutch assembly 400 or a planar area of a pressure piece 410, 420 in each case here (closed position G, open position O).

Cf. Figure 6, in which a section above the actuating means 304 of the actuator 30 is seated on a radial section of the pressure piece 420. And cf. Figure 7, in which a section below the actuating means 304 of the actuator 30 is seated on a section of the pressure piece 420, which extends in the circumferential direction Um and in the radial direction Ra. Of course, this can also be implemented analogously using the pressure piece 410.

Finally, Figure 8 also shows a CCS high-voltage connector 0 having a preferably multipart connector housing 1 and two mating faces 10, 12. In this case, a first mating face 10 is designed so that it can be covered by the protective flap device 2 (closed position G of the protective flap 20). Furthermore, this figure shows a housed motor 60 (cf. above), by means of which the protective flap 50 can be pivoted via the actuator 30 and the clutch assembly 400. The motor 60 or a housing of the motor 60 can be fixedly connected here to the holder 20, in particular screwed thereon.

### List of reference signs

- 0: (electric) high-voltage connector for an (electric) high-voltage connection
- 1: connector housing
- 2: (high-voltage connector) protective flap device

- 10: (first) mating face
- 12: (second) mating face

- 20: holder
- 30: actuator
- 40: clutch
- 50: (pivotable) protective flap
- 52: radial lever
- 54: mounting means, in particular mounting tab
- 60: motor

- 304: actuating means, in particular actuating recess

- 400: clutch assembly
- 404: pivoting means, in particular pin
- 410: (first) pressure piece
- 411: guide device, in particular guide projection
- 412: guide device, in particular guide recess
- 420: (second) pressure piece
- 421: guide device, in particular guide recess
- 422: guide device, in particular guide projection
- 423: (radial Rr inner) circumferential connection of two guide devices 422, 422
- 430: clutch axis
- 440: spring element, in particular coiled spring
- 450: clutch surface of the clutch assembly 400
- 452: clutch locking device for catching the clutch locking devices 551, 552, 553

- 550: clutch surface of the mounting means 54
- 551: clutch locking device for manual open position O
- 552: clutch locking device for electromechanical pivoting
- 553: clutch locking device for manual closed position G

- O: open position
- G: closed position

- SA: pivot axis
- Ar: axial direction (undirected) of the pivot axis SA
- Rr: radial direction (undirected) with respect to the pivot axis SA
- Ur: circumferential direction (undirected) with respect to the pivot axis SA

## Claims

1. High-voltage connector protective flap device (2) for an electrical high-voltage connector (0), in particular a high-voltage charging connector (0) for a vehicle having an electric traction motor or a charging station, having a holder (20), an actuator (30), and a protective flap (50), wherein
the protective flap (50) is configured to be pivotable between a closed position (G) and an open position (O) of the protective flap device (2) at the holder (20) to open and close a mating face (10) of the high-voltage connector (0), **characterized in that**
the protective flap device (2) is designed such that the protective flap (50) is pivotable as intended electromechanically by the actuator (30), and furthermore the protective flap (50) can alternatively be pivoted as intended manually.

2. High-voltage connector protective flap device (2) according to the preceding claim, **characterized in that**, for the electromechanical pivoting of the protective flap (50), the actuator (30) engages translationally or rotationally at the protective flap (50), and/or
for the manual pivoting of the protective flap (50), a clutch (40) is configured in a flow of force between the actuator (30) and the protective flap (50), by means of which the protective flap (50) can be decoupled from a holding force of the actuator (30).

3. High-voltage connector protective flap device (2) according to one of the preceding claims, **characterized in that** the protective flap (50) is pivotable around a pivot axis (SA), wherein:
the protective flap device (2) or the protective flap (50) has a radial lever (52) with respect to the pivot axis (SA), at which the actuator (30) engages and via which the protective flap (50) is pivotable,
the radial lever (52) of the protective flap device (2) or the protective flap (50) and a cover plane of the protective flap (50) are configured in relation to one another at an angle of approximately: 0°, 15°, 30°, 45°, 60°, 75°, 90°, 105°, 120°, 135°, 150°, 165°, or 180°, and/or
the actuator (30) is configured to be movable substantially translationally back and forth at/in the holder (20) for the electromechanical pivoting of the protective flap (50).

4. High-voltage connector protective flap device (2) according to one of the preceding claims, **characterized in that** the actuator (30) has an actuating means (304), by means of which a pivoting means (404) of the protective flap device (2) or the protective flap (50) is movable around the pivot axis (SA), wherein:
a bearing between the actuating means (304) and the pivoting means (404) converts a translational movement of the actuator (30) into a rotational movement of the pivoting means (404) with respect to the pivot axis (SA),
the bearing between the actuating means (304) and the pivoting means (404) is configured as a slide bearing, and/or
the actuator (30) with its actuating means (304) is formed essentially as a claw in the area of the pivoting means (404).

5. High-voltage connector protective flap device (2) according to one of the preceding claims, **characterized in that** the protective flap device (2) is designed such that:
the entire clutch (40) also pivots upon the electromechanical pivoting of the protective flap (50),
the clutch (40) is held closed in a friction-locked and/or form-fitting manner in an unloaded state,
the manual pivoting of the protective flap (50) is implemented by the clutch (40), and/or
the clutch (40) permits the manual pivoting of the protective flap (50) substantially independently of a position of the actuator (30).

6. High-voltage connector protective flap device (2) according to one of the preceding claims, **characterized in that** the clutch (40) comprises a clutch assembly (400) by means of which a force flow between the actuator (30) and the protective flap (50) can be established, on the one hand, and can be interrupted, on the other hand, wherein:
in a resting state of the clutch assembly (400), the force flow is established between the actuator (30) and the protective flap (50),
during electromechanical pivoting of the protective flap (50), the force flow is established between the actuator (30) and the protective flap (50), and/or during manual pivoting of the protective flap (50), the force flow is interrupted between the actuator (30) and the protective flap (50).

7. High-voltage connector protective flap device (2) according to one of the preceding claims, **characterized in that** the clutch assembly (400):
is mounted at/in the holder (20) so it is pivotable or rotatable around the pivot axis (SA), wherein the clutch assembly (400) is preferably accommodated at/in the holder (20) by means of a clutch axis (430),
is accommodated on the clutch axis (430) so it is movable back and forth in one or both axis directions (Ar), and/or
is designed to be elastic or resilient in the axis direction (Ar) of the pivot axis (SA) and is preferably drum-shaped or preferably box-shaped.

8. High-voltage connector protective flap device (2) according to one of the preceding claims, **characterized in that** the clutch assembly (400) comprises two press pieces (410, 420) movable toward one another, wherein:
the press pieces (410, 420) are configured as mechanically pre-tensioned toward one another in the axis direction (Ar) in the clutch assembly (400),
the press pieces (410, 420) are designed such that they mutually guide one another in the axis direction (Ar) such that they can only be pivoted or rotated together in circumferential direction (Ur), and/or
the pivoting means (404) of the protective flap device (2) for the protective flap (50) is configured between the press pieces (410, 420) in the axis direction (Ar).

9. High-voltage connector protective flap device (2) according to one of the preceding claims, **characterized in that**:
the clutch assembly (400) is arranged between two mounting means (54) of the protective flap (50), which are furthermore mounted to be pivotable or rotatable on the clutch axis (430),
the clutch assembly (400) has a clutch surface (450) of the clutch (40) of the protective flap device (2) on at least one axial (Ar) outer side, in particular on each of both axial (Ar) outer sides, and/or
at least one mounting means (54), in particular both mounting means (54), of the protective flap (50) has a clutch surface (550) of the clutch (40) of the protective flap device (2) on an axial (Ar) inner side.

10. High-voltage connector protective flap device (2) according to one of the preceding claims, **characterized in that**, for force transmission within the protective flap device (2):
two clutch surfaces (450, 550) relevant to one another of the clutch assembly (400) and a mounting means (54), are formed as friction surfaces and/or form-fitting surfaces,
two clutch surfaces (450, 550) relevant to one another of the clutch assembly (400) and a mounting means (54), have clutch locking devices (452; 551, 552, 553) relevant to one another, and/or
the clutch locking devices (452; 551, 552, 553) of the clutch surfaces (450, 550) relevant to one another can interact in such a way, that the protective flap (50) can be pivoted both electromechanically and manually between the closed position (G) and the open position (O).

11. High-voltage connector protective flap device (2) according to one of the preceding claims, **characterized in that**, for force transmission within the protective flap device (2):
a clutch surface (450) of the clutch assembly (400) has a single clutch locking device (452) for catching the clutch locking devices (551, 552, 553) of the mounting means (54),
a clutch surface (550) of the mounting means (54) has at least two, in particular three, clutch locking devices (551, 552, 553), which are arranged offset in relation to one another in the circumferential direction (Ur), and/or
the clutch surface (550) of the mounting means (54) has clutch locking devices (551, 552, 553) for a manual open position (O), an electromechanical pivoting, and/or a manual closed position (G) of the protective flap device (2).

12. High-voltage connector protective flap device (2) according to one of the preceding claims, **characterized in that** the protective flap device (2) is designed such that, in its closed position (G) and/or in its open position (O):
a self-locking is substantially established between the actuator (30) and the clutch assembly (400) or a preferably single press piece (410/420),
the actuator (30) is seated at the clutch assembly (400) such that the clutch assembly (400) prevents a further movement of the actuator (30), and/or
the actuator (30) is seated with a respective surface section against a respective surface section of the clutch assembly (400) or against a respective surface section of a single press piece (410/420).

13. High-voltage connector protective flap device (2) according to one of the preceding claims, **characterized in that**:
the protective flap device (2) has a motor (60) for operating the actuator (30),
the holder (20) is screwed together with the preferably housed motor (60), and/or
the protective flap device (2) forms a section of a connector housing (1) of the high-voltage connector (0).

14. Electrical high-voltage connector (0), in particular high-voltage charging connector (0) for a vehicle having an electric traction motor or a charging station, wherein
the high-voltage connector (0) has at least one connector housing (1) and a high-voltage connector protection flap device (2), **characterized in that**
the protective flap device (2) is designed according to one of the preceding claims.

15. Electrical high-voltage entity, in particular for a vehicle having an electric traction motor or a charging station, wherein
the high-voltage entity comprises an electrical high-voltage device and a high-voltage connector protective flap device (2), and/or an electrical high-voltage connector (0), **characterized in that**
the protective flap device (2) and/or the high-voltage connector (0) is designed according to one of the preceding claims.
